(19) Europäisches Patentamt
European Patent Office
Office européen des brevets

(11) Publication number: 0 415 072 A2

(12) EUROPEAN PATENT APPLICATION

(21) Application number: 90114052.5

(22) Date of filing: 23.07.90

(51) Int. Cl.5: C08L 69/00, C08L 83/10, C08K 5/54, C08G 77/448, //(C08L69/00,C08K5:54)

(30) Priority: 28.08.89 US 399096

(43) Date of publication of application: 06.03.91 Bulletin 91/10

(84) Designated Contracting States: DE ES FR GB IT NL

(71) Applicant: GENERAL ELECTRIC COMPANY
1 River Road
Schenectady New York 12305(US)

(72) Inventor: Davis, Gary Charles
5 Felicia Court
Albany, New York 12205(US)
Inventor: Lewis, Larry Neil
7 Harvest Drive
Scotia, New York 12302(US)

(74) Representative: Catherine, Alain
General Electric France Service de Propriété Industrielle 18 Rue Horace Vernet
F-92136 Issy-Les-Moulineaux Cedex(FR)

# (54) Flame retardant, halogen free aromatic polycarbonate copolymer blends.

(57) Flame retardant halogen-free aromatic polycarbonate copolymer blends are provided of certain triarylsilicon materials, such as hexaphenyldisiloxane with an aromatic polycarbonate copolymer which includes polyester carbonates having condensed silphenylenecarbonyl units. The aromatic polycarbonate blends can be injection molded at thicknesses of 1/16" to provide thermoplastics capable of satisfying the V-O requirements of the UL-94 test.

EP 0 415 072 A2

# FLAME RETARDANT, HALOGEN FREE AROMATIC POLYCARBONATE COPOLYMER BLENDS

## Cross Reference to Related Applications

Reference is made to copending applications [RD-18952] for "Substantially Transparent Flame Retardant Aromatic Polycarbonate Blends" and [RD-18919] for "Flame Retardant Aromatic Polycarbonate Blends" and copending application Serial No. 07/319,026, filed March 6, 1989, Policastro et al. for "Flame Retardant Aromatic Polycarbonate Blends" which are incorporated herein by reference.

## Background of the Invention

The present invention relates to transparent flame retardant injection moldable blends of aromatic polycarbonate copolymer having up to 5 mole percent of chemically combined silylarylsiloxy units, such as silylarylimide units or silylarylester units, based on the total moles of condensed silylarylsiloxy units and aromatic dihydric phenol carbonate units. More particularly, the present invention relates to the employment of a triarylsilicon material, such as a hexaaryldisiloxane, in combination with the aromatic polycarbonate copolymer to produce flame retardant blends capable of being injection molded to specific shapes having thicknesses of less than 1/8", while exhibiting V-O UL-94 test values.

Prior to the present invention, as shown by copending application by Policastro et al., Serial No. 07/319,026, filed March 6, 1989, certain poly(arylenesilicon) materials, such as the silicon-polycarbonate block copolymers of J. Rich et al., Serial No. 07/319,025, filed March 6, 1989, or the polyestersiloxane block copolymers of Policastro et al., Serial No. 07/319,027, filed March 6, 1989 were blended with aromatic polycarbonates resins to produce flame retardant aromatic polycarbonate blends. It was found, however, that although the resulting blends of aromatic polycarbonate resin and poly(arylenesilicon) material resulted in the production of flame retardant injection moldable materials, a thickness of 1/8" or greater of the aromatic polycarbonate blend was required to achieve a V-O UL-94 test value.

In copending application [RD-18952], Lewis et al., and RD-18,919, Lewis, filed concurrently herewith, it was found that if an effective amount of a triarylsilicon material, such as triphenylvinylsilane, or a silicate resin, were incorporated into a finely divided aromatic polycarbonate, such as Lexan polycarbonate, a 1/16" compression molded polycarbonate test slab could be made exhibiting UL-94 V-O properties.

It would be desirable therefore to provide flame retardant, aromatic polycarbonates which could be injection molded for certain applications at 1/16" and be capable of satisfying the V-O UL-94 test requirements. These requirements are shown by the Flammability of Plastic Materials Bulletin , January 24, 1980. More particularly, a 5" x 1/2" x 1/16" polycarbonate test bar containing an effective amount, as defined hereinafter, of arylene silicon material of the present invention, is suspended vertically over a 3/4" Bunsen Burner flame as provided in the aforementioned UL-94 test. The test sample preferably exhibits a UL-94 V-O rating which includes the following criteria:

A. Not have any specimen which burn with flaming combustion for more than 10 seconds after application of the test flame.

B. Not have a total flaming combustion time exceeding 50 seconds for 10 flame applications for each set of five specimens.

C. Not have any specimens which burn with flaming or glowing combustion up to the holding clamp.

D. Not have any specimens which drip flaming particles that ignite dry absorbent surgical cotton located 12 inches (305 mm) below the test specimen.

E. Not have any specimens with glowing combustion which persists for more than 30 seconds after the second removal of the test flame.

## Summary of the Invention

The present invention is based on the discovery that certain aromatic polycarbonate copolymers consisting essentially of arylcarbonate units and from 0.5 to 5 mole % of silylarylene units selected from the class consisting of silylarylcarbonyl units of the formula,

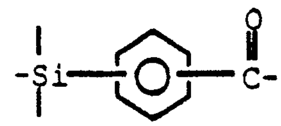 (1)

silylaryleneimide units of the formula,

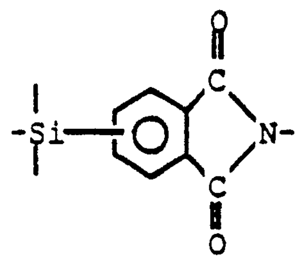 (2)

and mixtures thereof, based on the total moles of aryl carbonate units, and silylarylene units, can be blended with an effective amount of a triarylsilicon material, such as hexaphenyldisiloxane to produce a flame retardant aromatic polycarbonate blend capable of being injection molded to 1/16" to provide test samples exhibiting a V-O UL-94 rating, and the unsatisfied valence bonds of the silicon atoms of formulas (1) and (2) can be satisfied by $C_{(1-13)}$ monovalent organic radicals such as, $R^1$ radicals defined hereinafter, oxygen atoms or mixtures thereof.

Statement of the Invention

There is provided by the present invention, flame retardant aromatic polycarbonates comprising

(A) an aromatic polycarbonate copolymer consisting essentially of aromatic carbonate units condensed with 0.5 to 5 mole % of silarylene units based on the total moles of the aromatic carbonate units and silylarylene units which are members selected from the class consisting of silylarylene carbonyl units of formula (1), silylaryleneimide units of formula (2) and mixtures thereof and

(B) an amount of a triarylsilicon material which is effective for imparting sufficient flame retardancy to a 1/16" or greater injection molded test sample capable of satisfying UL-94 V-O test requirements.

Aromatic polyester siloxane polycarbonate block copolymers having chemically combined units of formula (1) can be made by effecting reaction between a dihydric phenol of the formula

HO-R-OH (3)

and an aroyl halide-terminated polydiorganosiloxane having the formula

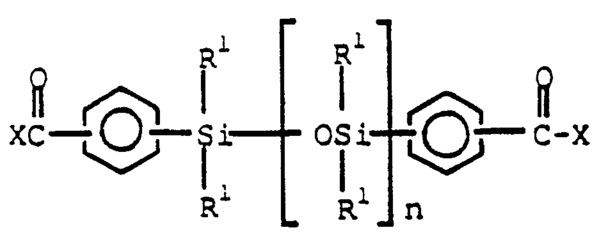 (4)

in the presence of an acid acceptor, such as a triarylamine and organic solvent followed by phosgenating the resulting mixture to produce a polyestercarbonate siloxane, where R is a $C_{(6-30)}$ divalent aromatic hydrocarbon radical, $R^1$ is selected from $C_{(1-13)}$ monovalent hydrocarbon radical and $C_{(1-13)}$ monovalent hydrocarbon radicals substituted with radicals inert during equilibration or condensation, and n is an integer equal to 1 to 100 inclusive and preferably 1 to 10 inclusive, and X is a halogen radical, such as chloro.

In addition to the above-described aroyl halide-terminated polydiorganosiloxanes of formula (4), there also can be used in the practice of the present invention, bisphenols of the formula

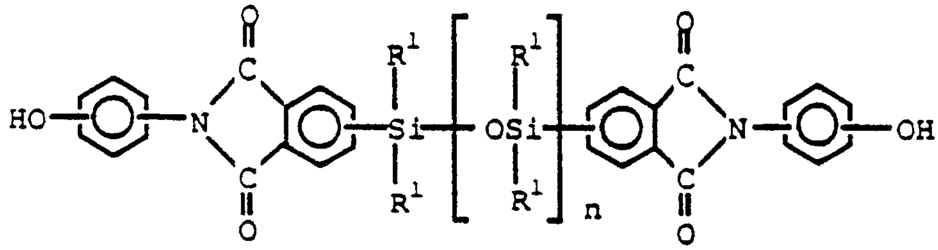 (5)

where $R^1$ and n are as previously defined. The aroyl halide-terminated polydiorganosiloxanes of formula (4) and the phthalimide phenol-terminated polydiorganosiloxanes of formula (5) and methods for making are shown respectively in copending applications Serial Nos. 07/319,025, filed March 6, 1989 and 07/319,027, filed March 6, 1989 which are incorporated herein by reference.

The triarylsilicon materials which can be utilized in combination with the aromatic polycarbonate copolymers used in the practice of the present invention to provide injection moldable thermoplastic flame retardant materials capable of passing the UL-94 flame retardant test at V-O at 1/16" thickness are triarylsilicon materials included by the formula

$(R^2)_3SiY$ (6)

where $R^2$ is selected from $C_{(6-13)}$ monovalent aromatic organic radicals and Y is a member selected from $-C_2H_3$, OH, $Si(R^2)_3$ and $-OSi(R^2)_3$. An effective amount of the triarylsilicon material which can be employed in the practice of the present invention is 4% to 5% by weight of the triarylsilicon material based on the weight of flame retardant aromatic copolycarbonate copolymer blend and preferably from 4% to 5% by weight. Some of these triarylsilicon materials are, for example, hexaphenyldisiloxane, triphenylvinylsilane, and triphenylsilanol. There is also contemplated in addition to the triarylsilicon materials of formula (6), the use of tetraphenyl silane as an effective flame retardant additive.

There are included within the dihydric phenols of formula (3) compounds, such as p,p′bisphenol A, m,p-bisphenol A, o,p-bisphenol A, spirobiindane bisphenol, tetramethylbisphenol A and tetramethylbiphenol.

In the practice of the present invention, the flame retardant halogen-free aromatic polycarbonate copolymer blends can be made by dry blending the aromatic polycarbonate copolymer with the arylsilicon material of formula (6). In particular instances, a branched aliphatic alcohol such as isobutanol can be added to facilitate the blending of the ingredients. However, in most instances melt blending can be effected at temperatures in the range of from 200° C to 350° C.

The flame retardant halogen-free aromatic polycarbonate copolymer blends of the present invention also can be reinforced with inert fillers such as silica filler, carbon fibers or glass fibers. The proportion of filler which can be utilized can vary from 1 to 100 parts of filler per 100 parts of the resulting aromatic polycarbonate copolymer composition by weight.

In order that those skilled in the art will be better able to practice the present invention, the following example is given by way of illustration and not by way of limitation. All parts are by weight unless otherwise indicated.

## Example

A polyestercarbonate copolymer having about 1.7 mole % of silphenylenecarbonyl units of formula (1) was prepared by reacting 47.04 grams of 1,2-bis(4-benzoylchloro)-1,1,2,2-tetramethyldisiloxane with 1299.6 grams of bisphenol A in 15.0 liters of methylene chloride containing 24.24 grams of triethylamine. After stirring for 30 minutes, 12.0 liters of water and 33.0 grams of p-cumylphenol chainstopper was added and the vigorously stirred mixture was treated with 657 grams of phosgene maintaining the pH between 9 and 11. The methylene chloride layer was washed with dilute HCl washed with water, precipitated into isopropanol and dried. Based on the method of preparation, the copolymer had 1.7 mole % formula (1) units incorporated with a $M_n$ of 19,800. The polyestercarbonate was extruded and injection molded into 1/16" test slabs. It was found that the test slab failed the UL-94 test because of flaming drip on the first burn.

A dry blend of 350 grams of the above polyestercarbonate copolymer and 18.4 grams of hexaphenyldisiloxane was prepared by agitating a mixture of the materials which were in finely divided form. There was obtained a dry blend having 5% by weight of the hexaphenyldisiloxane based on the weight of the blend. The blend was extruded and injection molded into 1/16" flame bars. The resulting bars were transparent and provided a V-O rating with average flame out times of 1.6 seconds with the first burn and 5.2 seconds

with the second burn, an average of 3.3 seconds with both burns.

A 5 weight % blend of the hexaphenyldisiloxane with Lexan 140 polycarbonate was injection molded following the same procedure and subjected to the UL-94 test at 1/16". It was found that the polycarbonate blend failed the UL-94 test as a flaming drip resulted.

Although the above example is directed to only a few of the very many variables which can be employed in the practice of the present invention to produce the halogen-free flame retardant aromatic copolymer blends, it should be understood that the present invention is directed to a much broader variety of blends as set forth in the description preceding this example which can include other aromatic polycarbonate copolymers having formula (2) units or mixtures of formulas (1) and (2) as well as other diarylsilicon materials as set forth in the description preceding this example.

## Claims

1. A flame retardant halogen-free aromatic polycarbonate comprising

(A) an aromatic polycarbonate copolymer consisting essentially of aromatic carbonate units condensed with 0.5 to 5 mole % of silarylene units based on the total moles of the aromatic carbonate units and silylarylene units selected from the class consisting of silylarylenecarbonyl units of the formula

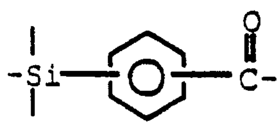 (1)

,

silylaryleneimide units of the formula

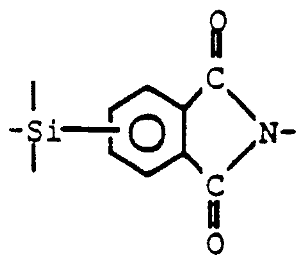 (2)

,

and mixtures thereof and,

(B) an amount of a triarylsilicon material which is effective for imparting sufficient flame retardancy to provide a 1/16" or greater injection molded test sample capable of satisfying the V-O requirements of UL-94, where the unsatisfied valence bonds of the silicon atoms of the silylaryl carbonyl units and the silyl and imide units, can be satisfied by $C_{(1-13)}$ monovalent organic radicals, oxygen atoms or mixtures thereof..

2. A flame retardant halogen-free injection moldable aromatic polycarbonate copolymer blend in accordance with claim 1, where the aromatic polycarbonate copolymer has condensed silylphenylenecarbonyl units.

3. A flame retardant halogen-free injection moldable aromatic polycarbonate copolymer blend in accordance with claim 1, where the aromatic polycarbonate copolymer has condensed silylphthalimide units.

4. A flame retardant halogen-free injection moldable aromatic polycarbonate copolymer blend in accordance with claim 1, where the triarylsilicon material is hexaphenyldisiloxane.

5. A transparent flame retardant halogen-free injection moldable aromatic polycarbonate blend in accordance with claim 1.

6. An aromatic polycarbonate copolymer in accordance with claim 1, where the aromatic carbonate units are bisphenol A carbonate units.